# EUROPEAN PATENT SPECIFICATION

(11) **EP 2 092 819 B1**
(45) Date of publication and mention of the grant of the patent: **28.12.2011**
(21) Application number: 09153617.7
(22) Date of filing: 25.02.2009
(51) Int. Cl.: A01F 25/20

(54) **Apparatus for cutting silage**
Vorrichtung zum Schneiden von Silage
Dispositif pour couper des produits ensilés

(30) Priority: 25.02.2008 NL 2001318
(43) Date of publication of application: 26.08.2009
(73) Proprietor: Schuitemaker Machines B.V., NL-7461 AG Rijssen (NL)
(72) Inventor: te Boekhorst, Paulus Andreas Johannes, 7434 SJ, Lettele (NL)
(74) Representative: Hatzmann, Martin

(56) References cited:
- EP-A- 0 102 406
- DE-A1- 2 644 729
- DE-U1- 9 208 490
- NL-A- 7 605 827

## Description

### FIELD AND BACKGROUND OF THE INVENTION

The invention relates to a silage cutter for cutting a block of silage from a silage pile.

Such a silage cutter is known from Dutch patent application 71 16 369. Other examples of such silage cutters are known from Dutch patent application 76 05 827, German patent application 35 38 666 and European patent application 0 093 820.

Silage is ensilaged cattle feed stored in a somewhat compressed form, for instance in a so-called silage pile into which the feed has been transported by tractor or a shovel, or in which previously compressed feed is stored. The silage pile is sealed off substantially air-tightly. In the silage pile, the ensilaged product undergoes a biochemical process, whereby the product remains well preserved. The compression and air-tight sealing of the silage pile is important to prevent decay and mould formation.

In practice, silage piles have a size such that the silage stored therein cannot be transported in one go to the feed silo from whence it can be dispensed in dosed manner for feeding the cattle. When the storage silo is too large, the feed loosened upon transferral to the storage silo decays. In, *inter alia*, Dutch patent application 1 021 534 C it is described to mix the feed in a feeder wagon from which the animals can be fed. Both when using a feeder wagon and when feeding from a silo, the feed is taken portion-wise from the silage, while between broaching a silage pile and emptying the silage pile a considerable amount of time passes.

It is therefore of importance that upon cutting silage from the silage pile, the compactness of the feed remaining behind is maintained as much as possible and that as little loosened feed as possible is left behind. It is further of importance, upon cutting, that the structure of the cut feed be affected as little as possible. In this respect, silage cutters that cut off blocks of feed are preferred over milling cutters which gradually cut the feed loose in accordance with the cut of the milling cutter through the silage pile.

In particular if a self-steering vehicle is used for cutting silage loose and transferring it to the stable or silo, the vehicle can be of relatively light design, because the time it takes for the vehicle to load and transfer the silage is not very important. However, when a light vehicle is used, the problem occurs that the vehicle has insufficient driving power and/or cannot exert sufficient traction for inserting the pins into the silage. This holds also and especially if the pins are to be driven into the silage at a relatively great height above the ground. Then, the vehicle has the tendency to flip over backwards.

### SUMMARY OF THE INVENTION

It is an object of the invention to provide a silage cutter, wherein inserting the pins into the silage of a silage pile requires relatively little press-on force.

This object is achieved according to the invention by providing a silage cutter according to claim 1.

By means of the drive or drives for driving movement of the pins relative to the supporting structure in longitudinal direction of the pins, the pins can move relative to the supporting structure. By moving the pins relative to the supporting structure, the total press-on force required for having the pins penetrate the silage can be limited when compared to the press-on force required when pressing stationary pins into the silage.

Special design aspects of the invention are laid down in the dependent claims.

In the following, the invention is further illustrated and elucidated on the basis of a few exemplary embodiments with reference to the drawing.

### BRIEF DESCRIPTION OF THE DRAWING

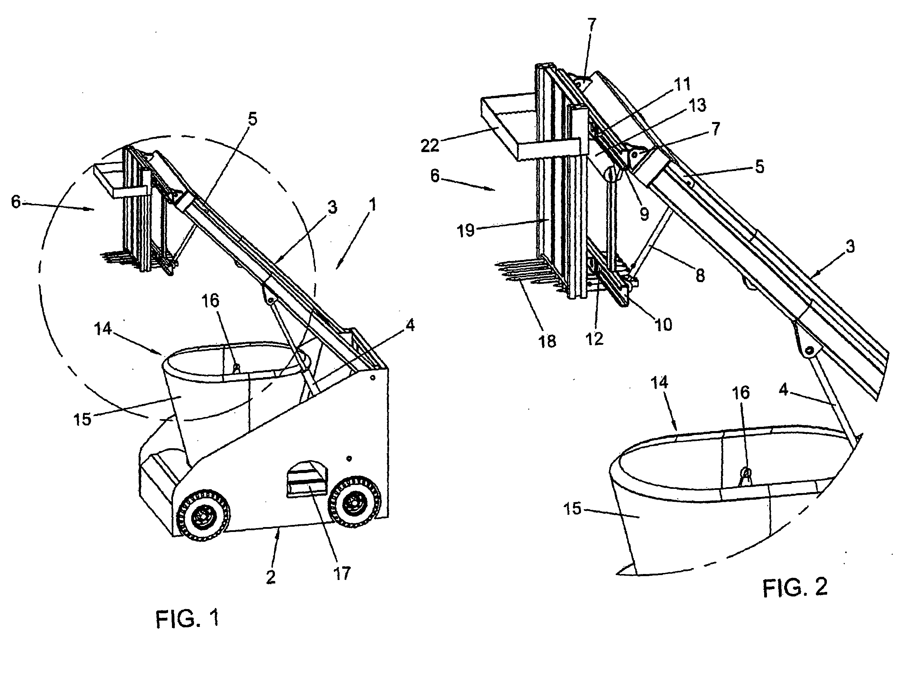

Fig. 1 is a perspective view of a vehicle according to the invention equipped with a silage cutter according to the invention;
Fig. 2 is an enlarged perspective representation of a portion II of the vehicle of Fig. 1; and

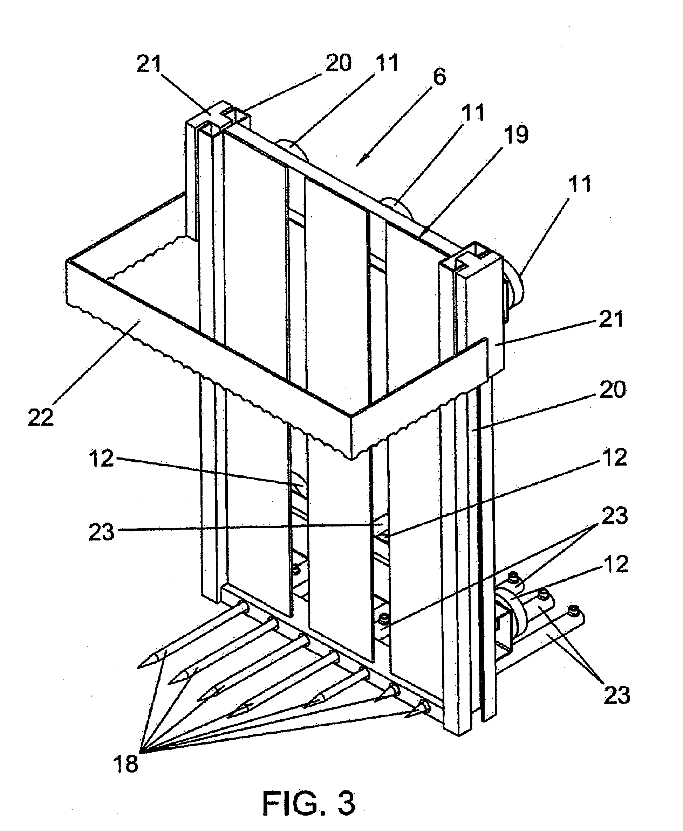

Fig. 3 is a further enlargement of the silage cutter of the vehicle according to Figs. 1 and 2.

### DETAILED DESCRIPTION

In the Figures, a vehicle 1 is represented which is provided with a chassis 2, an assembly 3, telescopically and pivotally movable relative to the chassis 2, having operating elements in the form of hydraulic cylinders 4, 5 for pivoting and telescopically lengthening and shortening, respectively, the assembly 3. For the sake of clarity, hydraulic lines, pressure vessels, pumps and valves for driving these cylinders 4, 5 and other cylinders of the shown vehicle are not represented. The assembly 3 bears a silage cutter 6 movable through movement of the assembly 3. By means of hinges 7, the silage cutter is pivotally suspended relative to the assembly 3, while the angle of the silage cutter 6 relative to the assembly 3 is governed by a hydraulic cylinder 8. For lateral movement of the silage cutter relative to the assembly, transverse guide rails 9, 10 are provided in which rollers 11, 12, respectively, of the silage cutter 6 can roll back and forth. Sideways movements of the silage cutter can be operated by a hydraulic cylinder 13 mounted between the assembly and the silage cutter 6, which is disposed substantially parallel to the rails 12, 13.

The vehicle 1 is further provided with a storage holder 14 with a bin 15, a mixing element in the form of a helix 16 and means for discharging feed from the storage holder 14, which discharge means, according to this example, are designed as a conveying belt 17.

The silage cutter 6 has a supporting structure 19 for rearward support of cut-out packs of silage. Furthermore, the supporting structure 19 bears a row of pins 18 located side by side in a condition of use, which project forward from the supporting structure 19, with the supporting structure 19 extending upwards from the pins 18 for rearward support of a cut-out silage block resting on the pins 18.

The supporting structure 19 is further provided with guides 20 in which runners 21 are reciprocally movable which bear a cutting blade 22 for cutting the silage. Thus, the cutting blade 22 is vertically movable in an area in front of the supporting structure 19. The drive for driving movements of the cutting blade 22 is designed in a manner known per se and is therefore not represented.

According to this example, the vehicle is of automotive and self-steering design and, for the steering, equipped with a transmitter and a receiver for receiving signals from transponders which modulate a signal transmitted by the transmitter. On the basis of the modulation received by the receiver, the position of the vehicle can be determined.

Such assemblies are known per se and commercially available and therefore not represented in the drawing and not further described. In particular with automotive vehicles, which generally have a relatively small transporting capacity, the problem arises that it is preferred that the vehicle has a relatively light motor and a relatively small weight. This poses limitations on the press-on force the vehicle can exert in longitudinal direction of the pins of the silage cutter 18 for inserting these into the silage, especially when the pins are to be inserted into the silage at a relatively great height (4 - 5 m) above the ground. However, also when using silage cutters other than on an automotive and self-steering vehicle, it is advantageous to limit the press-on force required for pressing the pins 18 of the silage cutter into the silage, in the first place to simplify insertion and in the second place to limit disruption of the compactness of the silage in the surroundings of the cut out block.

To limit the press-on force required for inserting the pins 18 into the silage, the silage cutter according to the example shown is provided with drives 23 in the form of hydraulic cylinders 23 for driving movement of the pins 18 in their longitudinal direction relative to the supporting structure 19. The hydraulic cylinders 23 are oriented in longitudinal direction of the pins 18, have a fixed part relative to the supporting structure 19, while each has a part coupled to a pin 18 and movable in the longitudinal direction of the pin.

By moving the pins 18 in their longitudinal direction relative to the supporting structure 19, the required total press-on force can be limited. Here, use can be made of one or more different effects such as through pulsation periodically exerting an enlarged force, through vibration providing a more effective urging away of the fibrous material and/or overcoming static friction, concentrating the press-on force each time on different pins, cutting a path through the silage by moving, boring in the silage and drawing the pins through screwing action in the silage. In particular, the pins 18 can be thrust in the silage with great force.

The drives 23 are arranged for successively driving the movement of, for each of the individual pins 18 separately, each time, one of the pins. This enables the pins 18 to be successively inserted into the silage, so that each time at least a large portion of the total press-on force is available for inserting the respective pin 18 into the silage and the total press-on force exerted by the vehicle 1 on the silage is not distributed over the entire number of pins 18.

It is also possible to insert the pins into the silage not individually but subgroup-wise, for instance each time two or three simultaneously, and/or to start inserting one or more following pins before the insertion of a previous pin 18 has been completed. Here, each time the movement of only a number of the pins is driven selectively. This offers the advantage that the insertion can be carried out faster than when the pins are inserted into the silage one by one. The extent to which several of the pins are simultaneously driven into the silage may be geared to the resistance the pins experience while being inserted into the silage. This may, in turn, be derived from the pressure in the hydraulic assembly between the pump and the hydraulic cylinders which move the pins. If it is sufficient that the pins are movable only per subgroup, a smaller number than when each pin should be individually movable can suffice, each coupled to a subgroup of the pins.

The distance over which the pins 18 are reciprocally movable in the longitudinal direction of the pins 18 is preferably at least half the length of the pins. Here, a stroke length of more than three quarters of the length of the pins is preferred. A great length of stroke is advantageous for rapidly inserting the pins into the silage.

However, it is also possible to insert the entire group of pins into the silage by traversing the cycle several times, while, first the pins are projected forward individually or per subgroup over a relatively smaller distance and then all pins are withdrawn again. For driving movements of the pins in their longitudinal direction over a short stroke, accordingly short driving elements can suffice, which, in turn, is advantageous for obtaining a compact, light construction.

Optionally, the pins of the silage cutter can also be bearing mounted for rotation about their respective central axes relative to the supporting structure, while the drive is furthermore designed for driving the rotation of the pins about their respective central axes. By rotating the pins in the silage during insertion, static friction between the silage and the pins can be interrupted and silage present in front of the pins can be moved aside more effectively.

The rotatable pins can furthermore have pointed free ends provided with cutting edges. As a result, the free ends of the pins can be bored into the silage.

Furthermore, the rotatable pins can have helical profiles, so that, upon rotation of the pins, the silage is moved rearwards and compacting of silage against the pins is prevented. Furthermore, if the helical profile has a sharp edge, fibrous silage is prevented from winding around the pins.

## Claims

1. A silage cutter for cutting a block of silage from a silage pile and moving the cut-out block, comprising:
a supporting structure (19);
a group of pins (18) located side by side in a condition of use, which each project forward from the supporting structure (19), wherein the supporting structure (19) extends upwards from the pins (18) for rearward support of a cut-out silage block;
a cutting blade (22) movable in an area in front of the supporting structure (19) for cutting a silage block from the silage;
**characterized by** at least one drive (23) for driving movement of the pins (18) relative to the supporting structure (19) in longitudinal direction of the pins (18).

2. A silage cutter according to claim 1, wherein said at least one drive (23) is designed for separately driving movements of at least subgroups of the pins (18).

3. A silage cutter according to claim 1, wherein said at least one drive (23) is designed for separately driving movements of at least a number of individual specimens of the pins (18).

4. A silage cutter according to any one of the preceding claims, wherein the pins (18) are reciprocally movable with a stroke which is at least half of the length of the pins (18).

5. A silage cutter according to any one of the preceding claims, wherein the drive (23) comprises hydraulic cylinders which are oriented in longitudinal direction of the pins (18), have a fixed part relative to the supporting structure (19) and have a part coupled to at least one pin and movable in longitudinal direction of the at least one pin.

6. An automotive and self-steering vehicle, provided with a chassis (2), an assembly (3) borne by the chassis (2) and movable relative to the chassis (2), with operating elements (4, 5) for driving movements of the assembly (3) and a silage cutter (6) according to any one of the preceding claims, movably borne by the assembly.

7. A vehicle according to claim 6, further comprising a storage holder (14) and transport means (17) for discharging feed from the storage holder (14).

## Patentansprüche

1. Silage-Schneidvorrichtung zum Schneiden eines Silageblocks von einem Silagestapel und Bewegen des abgeschnittenen Blocks, enthaltend:
eine Haltestruktur (19);
eine Gruppe von Stiften (18), die in einem Verwendungszustand nebeneinander angeordnet sind und jeweils von der Haltestruktur (19) hervorragen, wobei sich die Haltestruktur (19) nach oben von den Stiften (18) erstreckt, um einen abgeschnittenen Silageblock auf der Rückseite zu halten;
eine Schneidklinge (22), die in einem Bereich vor der Haltestruktur (19) beweglich ist, um einen Silageblock von der Silage zu schneiden;
**gekennzeichnet durch** wenigstens einen Antrieb (23) für eine Antriebsbewegung der Stifte (18) relativ zu der Haltestruktur (19) in einer Längsrichtung der Stifte (18).

2. Silage-Schneidvorrichtung nach Anspruch 1, bei der der wenigstens eine Antrieb (23) dazu eingerichtet ist, separat Antriebsbewegungen wenigstens an Teilgruppen der Stifte (18) hervorzurufen.

3. Silage-Schneidvorrichtung nach Anspruch 1, bei der der wenigstens eine Antrieb (23) dazu eingerichtet ist, separat Antriebsbewegungen an wenigstens einer Anzahl einzelner Exemplare der Stifte (18) hervorzurufen.

4. Silage-Schneidvorrichtung nach einem der vorhergehenden Ansprüche, bei der die Stifte (18) wechselseitig mit einem Hub bewegt werden können, der wenigstens die Hälfte der Länge der Stifte (18) umfasst.

5. Silage-Schneidvorrichtung nach einem der vorhergehenden Ansprüche, bei der der Antrieb (23) hydraulische Zylinder beinhaltet, die in Längsrichtung der Stifte (18) ausgerichtet sind, einen feststehenden Teil im Bezug auf die Haltestruktur (19) haben und über einen Teil verfügen, der mit wenigstens einem Stift gekoppelt und in der Längsrichtung des wenigstens einen Stiftes beweglich ist.

6. Selbstfahrendes und selbstlenkendes Fahrzeug, ausgestattet mit einer Karosserie (2), einer Anordnung (3), die auf der Karosserie (2) lagert und im Bezug auf die Karosserie (2) beweglich ist, mit Betätigungselementen (4, 5) für Antriebsbewegungen der Anordnung (3) und einer Silage-Schneidvorrichtung nach einem der vorhergehenden Ansprüche, die durch die Anordnung beweglich gelagert ist.

7. Fahrzeug nach Anspruch 6, weiterhin umfassend einen Vorratsbehälter (14) und eine Transporteinrichtung (17) zur Ausgabe von Futter aus dem Vorratsbehälter (14).

## Revendications

1. Dispositif pour couper des produits ensilés, destiné à découper un bloc de produit ensilé à partir d'une pile de produit ensilé et à déplacer le bloc découpé, comprenant :
une structure support (19) ;
un groupe de broches (18), situées côte à côte dans une condition d'utilisation, qui dépassent chacune à l'avant de la structure support (19), laquelle structure support (19) s'étend vers le haut depuis les broches (18) de manière à supporter de l'arrière un bloc de produit ensilé découpé ;
une lame de coupe (22), mobile dans une zone située devant la structure support (19), destinée à découper un bloc de produit ensilé à partir de la pile de produit ensilé ;
**caractérisé en ce que** au moins un entraînement (23) sert à commander le mouvement des broches (18) par rapport à la structure support (19) dans le sens longitudinal des broches (18).

2. Dispositif pour couper des produits ensilés selon la revendication 1, dans lequel ledit au moins un entraînement (23) est conçu pour commander séparément les mouvements au moins de sous-groupes des broches (18).

3. Dispositif pour couper des produits ensilés selon la revendication 1, dans lequel ledit au moins un entraînement (23) est conçu pour commander séparément les mouvements d'au moins un certain nombre d'exemplaires individuels des broches (18).

4. Dispositif pour couper des produits ensilés selon l'une quelconque des revendications précédentes, dans lequel les broches (18) peuvent décrire un mouvement de va et vient avec une course qui est au moins égale à la moitié de la longueur des broches (18).

5. Dispositif pour couper des produits ensilés selon l'une quelconque des revendications précédentes, dans lequel l'entraînement (23) comprend des vérins hydrauliques qui sont orientés dans le sens longitudinal des broches (18), qui ont une partie fixe par rapport à la structure support (19) et qui ont une partie couplée à au moins une broche et mobile dans le sens longitudinal de ladite au moins une broche.

6. Véhicule automobile et autodirecteur, comprenant un châssis (2), un ensemble (3) porté par le châssis (2) et mobile par rapport au châssis (2), avec des éléments actionneurs (4, 5) pour commander les mouvements de l'ensemble (3), et un dispositif pour couper des produits ensilés (6) selon l'une quelconque des revendications précédentes porté de manière mobile par l'ensemble.

7. Véhicule selon la revendication 6, comprenant en plus un conteneur de stockage (14) et des moyens de manutention (17) pour décharger le fourrage du conteneur de stockage (14).
